# EUROPÄISCHE PATENTSCHRIFT

(11) **EP 1 454 400 B1**
(45) Veröffentlichungstag und Bekanntmachung des Hinweises auf die Patenterteilung: **03.05.2006**
(21) Anmeldenummer: 02791722.8
(22) Anmeldetag: 27.11.2002
(51) Int. Cl.: H02K 11/04

(54) **ELEKTRISCHE ANTRIEBSEINHEIT**
ELECTRIC DRIVE UNIT
UNITE D'ENTRAINEMENT ELECTRIQUE

(30) Priorität: 14.12.2001 DE 10161367
(43) Veröffentlichungstag der Anmeldung: 08.09.2004
(73) Patentinhaber: Conti Temic microelectronic GmbH, 90411 Nürnberg (DE); TEMIC Automotive Electric Motors GmbH, 10553 Berlin (DE)
(72) Erfinder: DANO, Viktor, 90409 Nürnberg (DE); FACH, Hans-Joachim, 90427 Nürnberg (DE); FRIEDRICH, Ferdinand, 90562 Heroldsberg (DE); GRAMANN, Matthias, 91233 Neunkirchen a.S. (DE); ORTHMANN, Reinhard, 55130 Mainz (DE); PIRNER, Hermann, 82278 Illschwang (DE); SCHENCKE, Thomas, 16321 Schönow b. Berlin (DE); SUSEMIHL, Thomas, 26133 Oldenburg (DE); THIEL, Wolfgang, 85095 Denkendorf (DE); VON KNORRE, Dieter, 26209 Hatten (DE)
(86) Internationale Anmeldenummer: PCT/EP2002/013335
(87) Internationale Veröffentlichungsnummer: WO 2003/052905

(56) Entgegenhaltungen:
- EP-A- 1 063 752
- EP-A- 1 079 502
- DE-A- 4 418 000
- US-A- 6 051 899
- US-A- 6 107 708

## Beschreibung

Die Erfindung betrifft eine elektrische Antriebseinheit nach dem Oberbegriff des Patentanspruchs 1 wie sie aus der DE 41 22 529 A1 bekannt ist.
Elektrische Antriebseinheiten werden in vielfältigen Anwendungsgebieten eingesetzt, beispielsweise im Haushaltsbereich oder im Kraftfahrzeugbereich; insbesondere können in Kraftfahrzeugen verschiedene bewegliche Teile des Kraftfahrzeugs mittels elektrischer Antriebseinheiten verstellt werden (bsp. Sitze, Fensterheber, Schiebedächer etc.) oder mit variabler Drehzahl betätigt werden (bsp. Lüfter). Zur Belüftung eingesetzte elektrische Antriebseinheiten bestehen aus einem Elektromotor (Lüftermotor) als Antriebsvorrichtung zur Bereitstellung von elektrischer Antriebsleistung, aus einem elektronischen Steuermodul zur Ansteuerung des Elektromotors (beispielsweise zur Drehzahl- und Leistungsregelung des Elektromotors) und aus einem vom Elektromotor betätigten drehbaren Flügelrad als Arbeitsvorrichtung zur Erzeugung eines Arbeitsluftstroms.
Das elektronische Steuermodul weist (in der Regel auf einer Leiterplatte angeordnete) Bauteile auf, darunter insbesondere auch Leistungsbauteile mit einer hohen Verlustleistung, da im Betrieb der elektrischen Antriebseinheit oftmals Ströme mit sehr hohen Stromstärken fließen (bsp. 50 A) und hieraus auch eine hohe Aufnahmeleistung der elektrischen Antriebseinheit und damit der Leistungsbauteile resultiert. Demzufolge muß eine ausreichende Kühlung für das elektronische Steuermodul bzw. für die Bauteile des elektronischen Steuermoduls, insbesondere zum Abführen der Verlustleistung der Leistungsbauteile, bereitgestellt werden; hierzu werden die Bauteile des elektronischen Steuermoduls (zumindest aber deren Leistungsbauteile) mit Kühlflächen eines Kühlkörpers in Verbindung gebracht, insbesondere auf diesen Kühlflächen des Kühlkörpers angeordnet.
Um eine kompakte Bauweise und damit eine geringe Baugröße der elektrischen Antriebseinheit zu gewährleisten, müssen einerseits das elektronische Steuermodul und der auf einem Motorträger aufgebrachte Elektromotor so klein wie möglich ausgebildet werden, andererseits muß das elektronische Steuermodul so nahe wie möglich am Elektromotor positioniert werden, insbesondere sollte das elektronische Steuermodul direkt mit dem Motorträger verbunden werden. Probleme bereitet in diesem Falle die ausreichende Kühlung der Bauteile des elektronischen Steuermoduls, insbesondere das Abführen der Verlustleistung der Leistungsbauteile, da die Möglichkeiten zur Kühlung der Bauteile stark eingeschränkt werden oder ganz entfallen. Bei der gattungsgemäßen DE 41 22 529 A1 wird durch Ausbildung einer sich bis in den Bereich des Rotors des Elektromotors erstreckenden Ringwand für den Motorträger die als Kühlkörper wirkende Fläche des Motorträgers vergrößert und die Wärmeabfuhr verbessert, ohne daß der Platzbedarf für die elektrische Antriebseinheit ansteigt.

Die EP-A1-1 079 502 und US-A-6 107 708 offenbaren jeweils auch eine derartige elektrische Antriebseinheit.

Der Erfindung liegt die Aufgabe zugrunde, eine elektrische Antriebseinheit nach dem Oberbegriff des Patentanspruchs 1 anzugeben, bei der ein einfacher, zuverlässiger und kostengünstiger Aufbau und Betrieb ermöglicht wird.
Diese Aufgabe wird erfindungsgemäß durch die Merkmale im Kennzeichen des Patentanspruchs 1 gelöst.
Vorteilhafte Ausgestaltungen der Erfindung ergeben sich aus den weiteren Patentansprüchen.

Bei der vorgestellten elektrischen Antriebseinheit mit einem auf die Drehachse des als Antriebsvorrichtung vorgesehenen Elektromotors aufgesetzten Flügelrad als Arbeitsvorrichtung zur Erzeugung eines Arbeitsluftstroms wird die Kühlung der Bauteile des elektronischen Steuermoduls, insbesondere der Leistungsbauteile des elektronischen Steuermoduls, durch einen mit den zu kühlenden Bauteilen in Verbindung stehenden Kühlkörper mit mindestens einer Kühlfläche realisiert, bei dem mindestens eine Kühlfläche (vorzugsweise alle Kühlflächen) zumindest teilweise (vorzugsweise vollständig) in die Nabe des Flügelrads eingreifen, d.h. zumindest teilweise in die Nabe des Flügelrads hineinragen. Die Nabe des Flügelrads wird hierzu doppelwandig mit einer Außenwand und einer Innenwand und einem zwischen der Außenwand und der Innenwand gebildeten Nabeninnenraum ausgebildet, in den die in die Nabe des Flügelrads eingreifenden Kühlflächen des Kühlkörpers eingebracht werden. Im Nabeninnenraum werden Nabenkammern durch radial zwischen der Außenwand und der Innenwand verlaufende, eine Versteifung (der Nabe) des Flügelrads bewirkende Rippen (Stege) ausgebildet; die in die Nabe des Flügelrads eingreifenden Kühlflächen des Kühlkörpers werden bis in die Nähe dieser Rippen, vorzugsweise unmittelbar angrenzend zu diesen Rippen in den Nabeninnenraum eingebracht. Beim Aufbringen des Flügelrads auf die Drehachse des Elektromotors wird zwischen der Nabe des Flügelrads und dem zur Aufnahme des Elektromotors und des elektronischen Steuermoduls sowie zur Befestigung der elektrischen Antriebseinheit dienenden Trägerteil ein Spalt ausgebildet, bsp. zwischen der Außenwand der Nabe des Flügelrads und einer Zarge als Zentralteil des Trägerteils; weiterhin werden an geeigneter Stelle der elektrischen Antriebseinheit Durchgangsöffnungen für die sich im Nabeninnenraum befindliche Luft ausgebildet, vorzugsweise in der Nabe des Flügelrads (insbesondere als Bohrungen auf der Oberseite der Nabe des Flügelrads) und/oder im Rotor des Elektromotors (insbesondere als Langlöcher auf der Oberseite des Rotors) und/oder auf der Unterseite des Trägerteils (insbesondere auf der Unterseite der Zarge als Zentralteil des Trägerteils). Infolge des im Betrieb der elektrischen Antriebseinheit aufgrund der Rotation des Flügelrads erzeugten Arbeitsluftstroms (dieser wird durch Rotation der an der Außenwand der Nabe des Flügelrads angebrachten Flügel des Flügelrads erzeugt) wird auch an diesem Spalt zwischen der Nabe des Flügelrads und dem Trägerteil eine Luftströmung erzeugt, die eine Druckdifferenz zwischen der sich im Bereich des Spalts befindlichen Luft und der sich im Bereich der Durchgangsöffnungen befindlichen Luft bewirkt, d.h. durch die aktive Anströmung am Spalt entsteht eine Zwangskonvektion für die sich im Nabeninnenraum befindliche Luft. Aufgrund dieser Zwangskonvektion entweicht die sich im Nabeninnenraum befindliche erwärmte Luft aus der entsprechenden Austrittsöffnung (entweder aus dem Spalt oder aus den Durchgangsöffnungen), wobei dem Nabeninnenraum durch Eintrittsöffnungen (entweder durch die Durchgangsöffnungen oder durch den Spalt) aus dem Außenraum (d.h. von außerhalb der Nabe des Flügelrads) kühle Luft zugeführt wird. Hierdurch werden auch die sich im Nabeninnenraum befindlichen Kühlflächen des Kühlkörpers aktiv mit der aus dem Außenraum zugeführten Luft als Kühlmedium umströmt und dementsprechend gekühlt.
Als Elektromotoren der elektrischen Antriebseinheit können unterschiedlich betriebene und konfigurierte Lüftermotoren eingesetzt werden, wobei Wechselstrommotoren (AC-Motoren) als Asynchronmotoren (diese laufen asynchron zur eingespeisten Frequenz) oder Synchronmotoren (diese laufen synchron zur eingespeisten Frequenz) extern kommutiert werden und Gleichstrommotoren. (DC-Motoren) sich (in Abhängigkeit der angelegten Eingangsspannung) selbst kommutieren. Insbesondere können auch bürstenlose Gleichstrommotoren als (permanenterregte) Synchronmotoren verwendet werden, bei denen die Kommutierung mit einer Lageerkennung verknüpft wird; diese bürstenlose Gleichstrommotoren werden somit wie elektronisch kommutierte (sich selbst kommutierende) Gleichstrommotoren (EC-DC-Motoren) betrieben (d.h. die Selbstkommutierung erfolgt in Abhängigkeit der an die einzelnen Wicklungen angelegten Eingangsspannung). Weiterhin kann die Anordnung des feststehenden Stators bezüglich des sich drehenden Rotors unterschiedlich gewählt werden, insbesondere dreht sich bei sog. Außenläufermotoren der Rotor auf der Außenseite um den Stator und bei sog. Innenläufermotoren auf der Innenseite um den Stator.

Vorteilhafterweise ist bei der vorgestellten elektrischen Antriebseinheit ein kompakter Aufbau realisiert, ohne daß die zur Kühlung vorgesehenen Kühlflächen des Kühlkörpers die Bewegung des Flügelrads stören, da sie nicht im Arbeitsluftstrom liegen bzw. diesen nicht ungünstig beeinflussen, wodurch auch keine hieraus resultierenden störenden Geräusche entstehen. Durch Ausnutzung der im Betrieb der elektrischen Antriebseinheit auftretenden Luftströmungen, insbesondere der aktiven Anströmung am Spalt zwischen der Nabe des Flügelrads und dem Trägerteil, und den hierdurch bedingten Druckverhältnissen mit der Zwangskonvektion von Luft aus dem Nabeninnenraum wird zur Kühlung der sich im Nabeninnenraum des Flügelrads befindlichen Kühlflächen des Kühlkörpers kein separates Kühlmittel benötigt. Die Zuführung von Außenluft zur Kühlung in den Nabeninnenraum und die Abführung der erwärmten Luft aus dem Nabeninnenraum erfolgt durch einfache (ggf. bereits vorhandene) Eintrittsöffnungen und Austrittsöffnungen, die so ausgebildet sind, daß ein ausreichender Zustrom an Außenluft und damit die Kühlwirkung an den Kühlflächen des Kühlkörpers gewährleistet wird. Die Druckdifferenz zwischen dem zwischen der Nabe des Flügelrads und dem Trägerteil ausgebildeten Spalt einerseits und den Durchgangsöffnungen andererseits und damit auch die Zwangskonvektion der Luft im Nabeninnenraum und somit die durch die Abführung der erwärmten Luft aus dem Nabeninnenraum und die Zuführung von kühler Luft aus dem Außenraum bedingte Kühlwirkung ist unabhängig von der Strömungsrichtung des durch die Bewegung des Flügelrads erzeugten Arbeitsluftstroms, so daß unabhängig von der Einbaurichtung des Flügelrads und damit auch unabhängig von der Relativbewegung des Flügelrads bezüglich der Strömungsrichtung des Arbeitsluftstroms eine gute Kühlwirkung erzielt wird. Somit ergeben sich vielfältige und breit gestreute Anwendungs- und Einsatzmöglichkeiten der elektrischen Antriebseinheit.

Die elektrische Antriebseinheit wird im folgenden anhand eines Ausführungsbeispiels im Zusammenhang mit der Zeichnung näher beschrieben. Hierbei zeigt
- Figur 1: in einer dreidimensionalen Darstellung die voneinander getrennten Komponenten der elektrischen Antriebseinheit,
- Figur 2: in einer Draufsicht von unten die verbundenen Komponenten der elektrischen Antriebseinheit,
- Figur 3: in einer Schnittdarstellung die verbundenen Komponenten der elektrischen Antriebseinheit.
- Figur 4: in einer Seitenansicht die verbundenen Komponenten der elektrischen Antriebseinheit
- Figur 5: in einer Schnittdarstellung die verbundenen Komponenten der elektrischen Antriebseinheit in einer gegenüber der Figur 3 modifizierten Konfiguration der Komponenten.

Die elektrische Antriebseinheit 1 weist bsp. einen als Lüftermotor eines Kraftfahrzeugs ausgebildeten bürstenlosen Gleichstrommotor 3 als Antriebsvorrichtung, ein zur Steuerung des Lüftermotors 3, insbesondere zur Variation der Drehzahl des Lüftermotors 3 vorgesehenes elektronisches Steuermodul 2, ein zur Erzeugung eines Arbeitsluftstroms (Nutzluftstroms) vorgesehenes Flügelrad 4 als Arbeitsvorrichtung und ein Trägerteil 5 zur Aufnahme des elektronischen Steuermoduls 2 und des Lüftermotors 3 auf.
Die Drehzahl des Lüftermotors 3 soll bsp. in einem Drehzahlbereich zwischen 400 U/min und 2400 U/min (Nenndrehzahl) variiert werden, was durch Variation einer dem Lüftermotor 3 zugeführten Gleichspannung erreicht wird; bei der Nenndrehzahl von bsp. 2400 U/min wird die definierte Leistung des Lüftermotors 3 abgegeben. Der Lüftermotor 3 besitzt bsp. eine maximale Aufnahmeleistung von 600 W bei einer Motorklemmenspannung von 12 V und damit einen maximalen Motorstrom von 50 A, der durch Kommutierung auf die Spulenwicklungen des Lüftermotors 3 aufgeteilt wird (Kommutierung der Motorstränge des Lüftermotors 3).

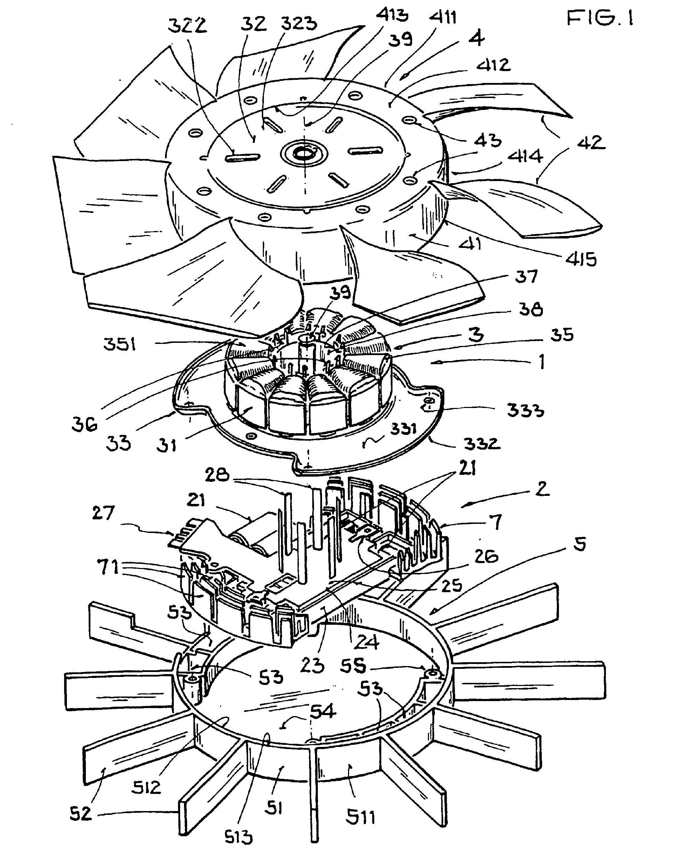

In der Figur 1 sind die voneinander getrennten Komponenten Lüftermotor 3, elektronisches Steuermodul 2, Flügelrad 4 und Trägerteil 5 der elektrischen Antriebseinheit 1 dargestellt:
- Die Bauteile 21 des auf der Unterseite 332 des Motorträgers 33 angeordneten elektronischen Steuermoduls 2 sind auf einer Leiterplatte 22 (vgl. Figur 3) aufgebracht, insbesondere sind als Bauteile 21 Kommutierungstransistoren zur Kommutierung der Motorstränge des Lüftermotors 3 vorgesehen, bsp. vier als Feldeffekttransistoren ausgebildete Kommutierungstransistoren, deren Anschlußpins mit Kontaktierungsstellen auf der Leiterplatte 22 bzw. mit einem Stanzgitter 24 kontaktiert sind und deren Gehäuse auf den bsp. aus Aluminium bestehenden Kühlflächen 71 des Kühlkörpers 7 angeordnet sind. Zum Schutz der Bauteile 21 des elektronischen Steuermoduls 2 ist die Leiterplatte 22 in ein bsp. aus Kunststoff bestehendes Gehäuse 23 eingebracht. Das zur elektrischen Verbindung der Bauteile 21 und zur Bereitstellung einer externen Anschlußmöglichkeit vorgesehene Stanzgitter 24 wird aus mehreren mit Kunststoff 25 umspritzten Stanzgitteranschlüssen 26 gebildet; die nach außen geführten Stanzgitteranschlüsse 26 werden in mindestens einem Steckeranschluß 27 zusammengefaßt, an dem insbesondere mindestens ein Anschlußstecker zur Verbindung der elektrischen Antriebseinheit 1 mit weiteren Baugruppen angeschlossen werden kann, bsp. zur Verbindung der elektrischen Antriebseinheit 1 mit dem Bordnetz des Kraftfahrzeugs zur Spannungsversorgung und/oder mit einer Schalteinheit zur Zuführung eines Ansteuersignals zum Einschalten des Lüftermotors 3. Weiterhin werden durch das Stanzgitter 24 Verbindungselemente 28 gebildet, die senkrecht aus der Ebene der Leiterplatte 22 weggeführt sind; bsp. sind sechs Verbindungselemente 28 vorgesehen, wobei bsp. zwei Verbindungselemente 28 zur Spannungsversorgung des Lüftermotors 3 und vier Verbindungselemente 28 für die Kommutierung des Lüftermotors 3 vorgesehen sind. Die Verbindungselemente 28 bestehen bsp. aus Elektrolytkupfer mit einer Dicke von bsp. 0.8 mm und besitzen bsp. einen quadratischen Durchmesser von bsp. 6 mm; die Länge der Verbindungselemente 28 wird entsprechend der Höhe des Stators 31 des Lüftermotors 3 und damit abhängig von der Leistung der elektrischen Antriebseinheit 1 gewählt, bsp. beträgt die Länge der Verbindungselemente 28 ca. 70 mm.
- Der bsp. als Außenläufermotor ausgebildete Lüftermotor 3 weist einen aus mehreren Statorspulen 35 mit Spulenwicklungen 351 gebildeten, auf der Oberseite 331 des Motorträgers 33 angeordneten kreisförmigen Stator 31 und einen auf der Außenseite um den Stator 31 umlaufenden Rotor 32 auf. Die als Kreissegmente ausgebildeten Statorspulen 35 sind derart angeordnet, daß in der Mitte eine Aussparung 38 entsteht, in der die Drehachse 39 des Lüftermotors 3 eingesetzt ist. In der Oberseite 323 des Rotors 32 sind mehrere bsp. als Langlöcher 322 ausgebildete Durchgangsöffnungen eingebracht, die bsp. sternförmig bezüglich der Drehachse 39 des Lüftermotors 3 angeordnet sind. Der Motorträger 33 weist Durchführungen 34 (vgl. Figur 3) für die vom Stanzgitter 24 des elektronischen Steuermoduls 2 ausgehenden Verbindungselemente 28 auf, die hierdurch zu den einzelnen Statorspulen 35 geführt werden. An den Enden der Spulenwicklungen 351 der Statorspulen 35 sind zur Realisierung der Anschlußkontakte für den Stator 3 bzw. die Statorspulen 35 als Kontaktelemente Kontakthaken 36 und/oder Kontaktflächen 37 angebracht; die durch die Durchführungen 34 hindurchgeführten und auf der Innenseite der Aussparung 38 geführten Verbindungselemente 28 werden auf geeignete Weise entweder mit den Kontakthaken 36 oder mit den Kontaktflächen 37 elektrisch leitend verbunden, bsp. werden die Verbindungselemente 28 mit den Kontaktflächen 37 verschweißt. Die in den Motorträger 33 eingebrachten Löcher 333 dienen zur Befestigung des Motorträgers 33 und damit des Elektromotors 3 und des elektronischen Steuermoduls 2 am Trägerteil 5.
- Das Flügelrad 4 besteht aus der auf den Rotor 32 des Lüftermotors 3 aufgebrachten Nabe 41 und den an der Außenwand 41 1 der Nabe 41 radial angeordneten Flügeln 42 (bsp. sind sieben Flügel 42 vorgesehen); auf der Oberseite 412 der Nabe 41 sind bsp. als Bohrungen 43 ausgebildete Durchgangsöffnungen eingebracht. Diese Bohrungen 43 dienen ebenso wie die auf der Oberseite 323 des Rotors 32 vorgesehenen Langlöcher 322 zum Zuführen von (kühler) Außenluft in den zwischen der Außenwand 411 und der Innenwand 413 der Nabe 41 gebildeten Nabeninnenraum 414 oder zum Abführen der sich im Nabeninnenraum 414 befindlichen Luft. Das Flügelrad 4 wird an der Unterseite 415 der Nabe 41 auf das Trägerteil 5 aufgesetzt.
- Das Trägerteil 5 besitzt ein bsp. als Zarge in Form eines Kreisrings ausgebildetes Zentralteil 51, an dessen Außenwand 511 mehrere radial angeordnete Stege 52 zur Befestigung des Trägerteils 5 und damit der elektrischen Antriebseinheit 1 vorgesehen sind. Der Innenraum 54 des Zentralteils 51 ist zum Einbringen des elektronischen Steuermoduls 2 vorgesehen, wobei auf der Innenwand 512 des Zentralteils 51 mehrere Kammern 53 zur Aufnahme der Kühlflächen 71 des Kühlkörpers 7 des elektronischen Steuermoduls 2 ausgebildet sind. Weiterhin sind auf der Innenwand 512 des Zentralteils 51 benachbart zu den Kammern 53 mehrere zu den Löchern 333 im Motorträger 33 korrespondierende Aufnahmeöffnungen 55 vorgesehen, über die der Motorträger 33 und damit der Lüftermotor 3 von der Oberseite 513 des Trägerteils 5 her mittels geeigneter Befestigungsmittel (bsp. mittels Schrauben) im Zentralteil 51 des Trägerteils 5 befestigt wird. Das Trägerteil 5 wiederum wird mittels der Stege 52 an dem hierfür vorgesehenen geeigneten Einbauort an der Karosserie oder an Aggregaten des Kraftfahrzeugs befestigt, bsp. auf den Kühler des Kraftfahrzeugs aufgeschraubt.

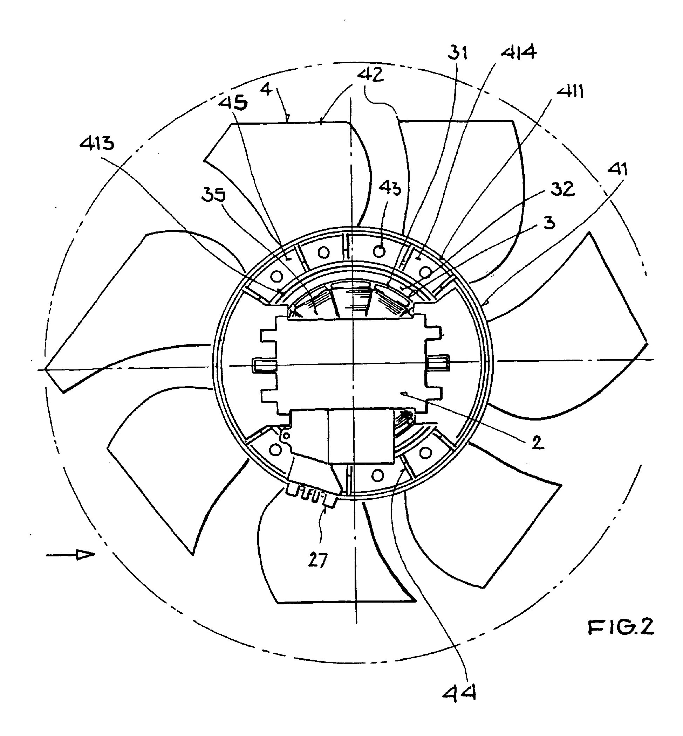

In der Figur 2 ist die zusammengesetzte elektrische Antriebseinheit 1 in einer Ansicht von unten dargestellt. Wie hieraus ersichtlich wird, ist die Nabe 41 des Flügelrads 4 doppelwandig mit der Außenwand 411 und der Innenwand 413 ausgebildet, der zwischen der Außenwand 411 und der Innenwand 413 gebildete Nabeninnenraum 414 ist in einem Teilbereich durch zwischen der Außenwand 411 und der Innenwand 413 der Nabe 41 angeordnete, eine Versteifung der Nabe 41 des Flügelrads 4 bewirkende Rippen 44 in Nabenkammern 45 unterteilt. An der Außenwand 411 der Nabe 41 des Flügelrads 4 sind die Flügel 42 angebracht, die Innenwand 413 der Nabe 41 des Flügelrads 4 ist mit dem um den Stator 31 umlaufenden Rotor 32 des Elektromotors 3 verbunden. Die Kühlflächen 71 des Kühlkörpers 7 des elektronischen Steuermoduls 2 werden in den Nabeninnenraum 414 eingebracht, vorzugsweise so weit, daß sie unmittelbar an die im Nabeninnenraum 414 gebildeten Nabenkammern 45 und damit an die Rippen 44 angrenzen.

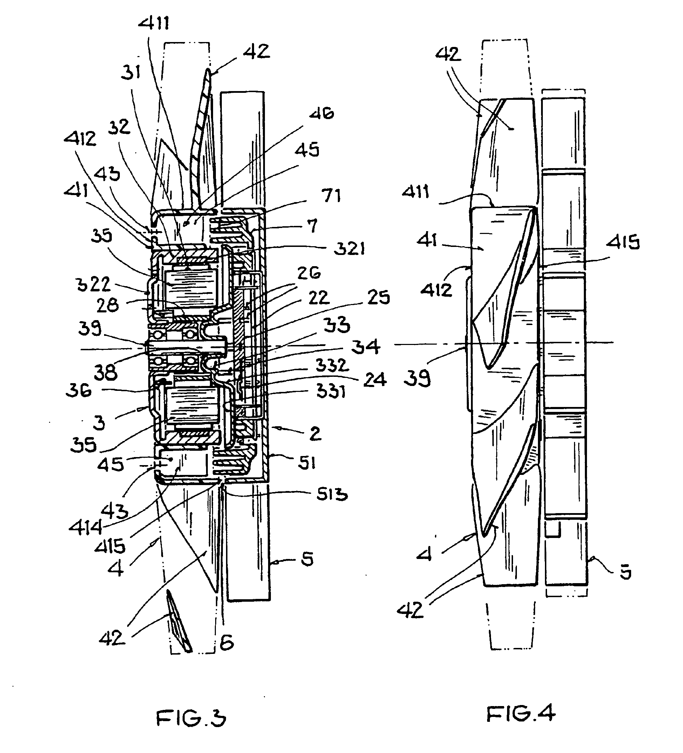

In der Figur 3 ist in einer Schnittzeichnung und in der Figur 4 in einer Seitenansicht die zusammengesetzte elektrische Antriebseinheit dargestellt.
Die Drehachse 39 des um den Stator 31 umlaufenden Rotors 32 des Lüftermotors 3 ist in die Aussparung 38 eingeführt und über Lager gesichert; die Magnete 321 des Rotors 32 sind bsp. auf der Innenseite des Rotors 32 aufgebracht. Aufgrund der zentralen Anordnung des elektronischen Steuermoduls 2 und insbesondere wegen der elektrischen Verbindung von elektronischem Steuermodul 2 und Lüftermotor 3 über die zentral in der elektrischen Antriebseinheit 1 geführten Verbindungselemente 28 ist das unterhalb des Motorträgers 33 angeordnete elektronische Steuermodul 2 vollständig innerhalb der Abmessungen des Stators 31 plazierbar, d.h. es ragt an keiner Stelle über den Motorträger 33 hinaus.
Zwischen der Oberseite 513 des Zentralteils 51 des Trägerteils 5 und der Unterseite 415 der Nabe 41 des Flügelrads 4 wird ein mit dem Nabeninnenraum 414 in Verbindung stehender Spalt 6 ausgebildet. Unabhängig von der Strömungsrichtung des durch die Bewegung der Flügel 42 des Flügelrads 4 erzeugten Arbeitsluftstroms entsteht eine Druckdifferenz zwischen der sich im Bereich des Spalts 6 befindlichen Luft und der sich im Bereich der Bohrungen 43 und Langlöcher 322 befindlichen Luft und folglich eine Konvektion der Luft zwischen dem Spalt 6 einerseits und den Bohrungen 43 und Langlöchern 322 andererseits via Nabeninnenraum 414; infolgedessen entweicht die durch den Kontakt mit den Kühlflächen 71 des Kühlkörpers 7 erwärmte Luft aus dem Nabeninnenraum 414, wobei dem Nabeninnenraum 414 aus dem Außenraum kühle Außenluft zugeführt wird. Hierdurch wird demnach eine Kühlung der in den Nabeninnenraum 414 vorzugsweise unmittelbar bis zu den Nabenkammern 45 eingebrachten, d.h. unmittelbar an die Nabenkammern 45 angrenzenden Kühlflächen 71 des Kühlkörpers 7 und damit eine Kühlung der auf diesen Kühlflächen 71 angeordneten Bauteile 21 des elektronischen Steuermoduls 2 bewirkt.

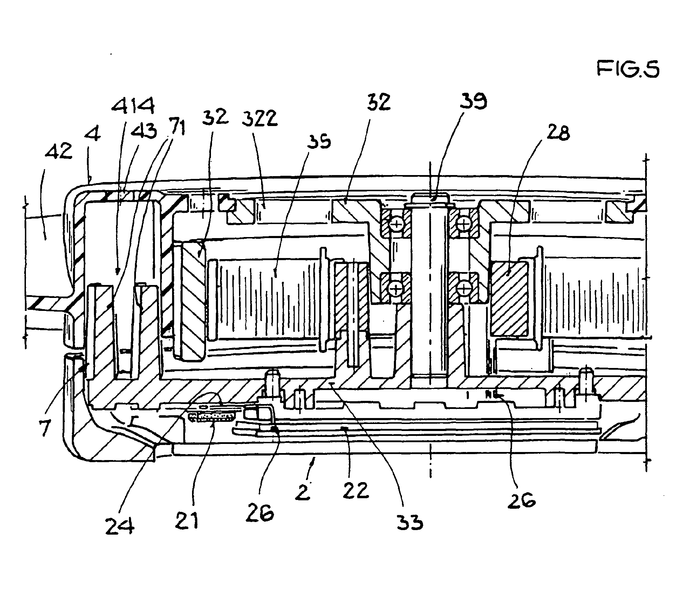

Gemäß der Schnittzeichnung der Figur 5 sind in einem anderen Ausführungsbeispiel der elektrischen Antriebseinheit 1 die Kühlflächen 71 des Kühlkörpers 7 mit dem Motorträger 33 verbunden, insbesondere sind die Kühlflächen 71 des Kühlkörpers 7 als Teil des Motorträgers 33 im Randbereich des Motorträgers 33 angeordnet, d.h. der Motorträger 33 und die Kühlflächen 71 sind einstückig als eine Einheit ausgebildet. Die zu kühlenden Bauteile 21 des elektronischen Steuermoduls 2 sind auf der Unterseite der Kühlflächen 71 angeordnet, wodurch im Betrieb der elektrischen Antriebseinheit 1 eine Kühlung der in den Nabeninnenraum 414 eingebrachten Kühlflächen 71 und damit der zu kühlenden Bauteile 21 des elektronischen Steuermoduls 2 bewirkt wird.

## Patentansprüche

1. Elektrische Antriebseinheit (1) mit folgenden Komponenten:
einem auf der Oberseite (331) eines Motorträgers (33) angeordneten, einen Stator (31) und einen sich um eine Achse (39) des Stators (31) drehenden Rotor (32) aufweisenden Elektromotor (3),
einem auf der Unterseite (332) des Motorträgers (33) angeordneten, Bauteile (21) aufweisenden elektronischen Steuermodul (2) zur Ansteuerung des Elektromotors (3),
einem mit Bauteilen (21) in Verbindung stehenden Kühlkörper (7) mit mindestens einer Kühlfläche (71),
einem Trägerteil (5) zur Aufnahme des elektronischen Steuermoduls (2) und des Elektromotors (3),
und einem auf die Drehachse (39) des Elektromotors (3) aufgesetzten Flügelrad (4) zur Erzeugung eines Arbeitsluftstroms,
**dadurch gekennzeichnet,**
**daß** die Nabe (41) des Flügelrads (4) doppelwandig mit einer Innenwand und einer Außenwand (411) und einem sich zwischen der Außenwand (411) und der Innenwand (413) befindlichen Nabeninnenraum (414) ausgebildet ist,
**daß** mindestens eine Kühlfläche (71) des Kühlkörpers (7) zumindest teilweise in den Nabeninnenraum (414) hineinragt,
und **daß** der Nabeninnenraum (414) mit einem zwischen der Nabe (41) des Flügelrads (4) und dem Trägerteil (5) ausgebildeten Spalt (6) sowie mit in mindestens einer Komponente der elektrischen Antriebseinheit (1) vorgesehenen Durchgangsöffnungen (322, 43) in Verbindung steht, wodurch sich im Betrieb der elektrischen Antriebseinheit bei einer Bewegung des Flügelrads (4) eine Luftströmung zwischen dem Spalt (6) und den Durchgangsöffnungen (322, 43) ausbildet.

2. Elektrische Antriebseinheit nach Anspruch 1, **dadurch gekennzeichnet, daß** die Durchgangsöffnungen (43) in der Nabe (41) des Flügelrads (4) vorgesehen sind.

3. Elektrische Antriebseinheit nach Anspruch 2, **dadurch gekennzeichnet, daß** die Durchgangsöffnungen (43) als Bohrungen in der Oberseite (412) der Nabe (41) des Flügelrads (4) ausgebildet sind.

4. Elektrische Antriebseinheit nach einem der Ansprüche 1 bis 3, **dadurch gekennzeichnet, daß** die Durchgangsöffnungen (322) im Rotor (32) des Elektromotors (3) vorgesehen sind.

5. Elektrische Antriebseinheit nach Anspruch 4, **dadurch gekennzeichnet, daß** die Durchgangsöffnungen (322) als Langlöcher in der Oberseite (323) des Rotors (32) ausgebildet sind.

6. Elektrische Antriebseinheit nach einem der Ansprüche 1 bis 5, **dadurch gekennzeichnet, daß** der Spalt (6) zwischen der Oberseite (513) eines als Kreisring ausgebildeten Zentralteils (51) des Trägerteils (5) und der Unterseite (415) der Nabe (41) des Flügelrads (4) ausgebildet ist.

7. Elektrische Antriebseinheit nach einem der Ansprüche 1 bis 6, **dadurch gekennzeichnet, daß** alle Kühlflächen (71) des Kühlkörpers (7) in den Nabeninnenraum (414) hineinragen.

8. Elektrische Antriebseinheit nach einem der Ansprüche 1 bis 7, **dadurch gekennzeichnet, daß** die Innenwand (413) der Nabe (41) des Flügelrads (4) mit dem Elektromotor (3) verbunden ist, und daß an die Außenwand (411) der Nabe (41) des Flügelrads (4) Flügel (42) angebracht sind.

9. Elektrische Antriebseinheit nach einem der Ansprüche 1 bis 8, **dadurch gekennzeichnet, daß** der Nabeninnenraum (414) durch die Außenwand (411) mit der Innenwand (413) verbindende Rippen (44) in einzelne Nabenkammern (45) unterteilt ist.

10. Elektrische Antriebseinheit nach Anspruch 9, **dadurch gekennzeichnet, daß** die Kühlflächen (71) des Kühlkörpers (7) bis zu den Rippen (44) in den Nabeninnenraum (414) hineinragen.

11. Elektrische Antriebseinheit nach einem der Ansprüche 1 bis 10, **dadurch gekennzeichnet, daß** der Stator (31) aus mehreren als Kreissegmente ausgebildeten Statorspulen (35) besteht, und daß der Stator (31) eine kreisförmige Gestalt mit einer zentralen Aussparung (38) zur Aufnahme der Drehachse (39) des Elektromotors (3) aufweist.

12. Elektrische Antriebseinheit nach einem der Ansprüche 1 bis 11, **dadurch gekennzeichnet, daß** zur elektrischen Kontaktierung der Bauteile (21) des elektronischen Steuermoduls (2) ein mit der Unterseite (332) des Motorträgers (33) verbundenes Stanzgitter (24) vorgesehen ist, von dem Verbindungselemente (28) als Stanzgitteranschlüsse (26) zu den Anschlußkontakten (36, 37) des Elektromotors (3) führen.

13. Elektrische Antriebseinheit nach einem der Ansprüche 1 bis 12, **dadurch gekennzeichnet, daß** das elektronische Steuermodul (2) Kommutierungsschalter zur Kommutierung des Elektromotors (3) aufweist.

14. Elektrische Antriebseinheit nach Anspruch 13, **dadurch gekennzeichnet, daß** die Kommutierungsschalter als Kommutierungstransistoren (21) ausgebildet sind.

15. Elektrische Antriebseinheit nach einem der Ansprüche 1 bis 14, **dadurch gekennzeichnet, daß** der Elektromotor (3) als bürstenloser Gleichstrommotor ausgebildet ist.

16. Elektrische Antriebseinheit nach einem der Ansprüche 1 bis 15, **dadurch gekennzeichnet, daß** der Elektromotor (3) als Außenläufermotor mit einem sich auf der Außenseite um den Stator (31) drehenden Rotor (32) ausgebildet ist.

## Claims

1. An electric drive unit (1) with the following components:
an electric motor (3) which is arranged on the upper side (331) of a motor support (33), comprising a stator (31) and a rotor (32) which rotates around an axis (39) of the stator (31),
an electronic control module (2) for triggering the electric motor (3), arranged on the lower side (332) of the motor support (33), comprising components (21),
a heat sink (7) connected with components (21), with at least one cooling surface (71)
a support part (5) for retaining the electronic control module (2) and the electric motor (3)
and an impeller wheel (4) placed upon the rotational axis (39) of the electric motor (3) for producing a working air flow,
**characterised in that**
the hub (41) of the impeller wheel (4) is double-walled, with an inner wall and an outer wall (411) and an inner hub area (414) which is located between the outer wall (411) and the inner wall (413),
at least one cooling surface (71) of the heat sink (7) extends at least partially into the inner hub area (414),
and the inner hub area (414) is connected with a slit (6) formed between the hub (41) of the impeller wheel (4) and the support part (5), and with through openings (322, 43) which are fitted in at least one component of the electric drive unit (1), thus producing an air flow between the slit (6) and the through openings (322, 43) when the impeller wheel moves (4) while the electric drive unit is in operation.

2. An electric drive unit according to claim 1, **characterised in that** the through openings (43) are fitted in the hub (41) of the impeller wheel (4).

3. An electric drive unit according to claim 2, **characterised in that** the through openings (43) are bore holes in the upper side (412) of the hub (41) of the impeller wheel (4).

4. An electric drive unit according to any one of claims 1 to 3, **characterised in that** the through openings (322) are fitted in the rotor (32) of the electric motor (3).

5. An electric drive unit according to claim 4, **characterised in that** the through openings (322) are long holes in the upper side (323) of the rotor (32).

6. An electric drive unit according to any one of claims 1 to 5, **characterised in that** the slit (6) is formed between the upper side (513) of a central part (51) which is a circular ring on the support part (5) and the lower side (415) of the hub (41) of the impeller wheel (4).

7. An electric drive unit according to any one of claims 1 to 6, **characterised in that** all cooling surfaces (71) of the heat sink (7) extend into the inner hub area (414).

8. An electric drive unit according to any one of claims 1 to 7, **characterised in that** the inner wall (413) of the hub (41) of the impeller wheel (4) is connected to an electric motor (3) and that blades (42) are attached to the outer wall (411) of the hub (41) of the impeller wheel (4).

9. An electric drive unit according to any one of claims 1 to 8, **characterised in that** the inner hub area (414) is divided into individual hub chambers (45) by the ribs (44) which connect outer wall (411) with the inner wall (413).

10. An electric drive unit according to claim 9, **characterised in that** the cooling surfaces (71) of the heat sink (7) extend up to the ribs (44) in the inner hub area (414).

11. An electric drive unit according to any one of claims 1 to 10, **characterised in that** the stator (31) consists of several stator coils (35) which are formed as circle segments, and that the stator (31) comprises a circular design with a central recess (38) for retaining the rotational axis (39) of the electric motor (3).

12. An electric drive unit according to any one of claims 1 to 11, **characterised in that** in order to create an electric contact of the components (21) of the electronic control module (2), a leadframe (24) is fitted which is connected to the lower side (332) of the motor support (33), from which connecting elements (28) lead as leadframe connections (26) to the connecting contacts (36, 37) of the electric motor (3).

13. An electric drive unit according to any one of claims 1 to 12, **characterised in that** the electronic control module (2) comprises commutating switches in order to commutate the electric motor (3).

14. An electric drive unit according to claim 13, **characterised in that** the commutating switches are commutating transistors (21).

15. An electric drive unit according to any one of claims 1 to 14, **characterised in that** the electric motor (3) is a brushless direct current motor.

16. An electric drive unit according to any one of claims 1 to 15, **characterised in that** the electric motor (3) is an external rotor motor with a rotor (32) which rotates on the outer side around the stator (31).

## Revendications

1. Unité d'entraînement électrique (1), avec les composants suivants :
un moteur électrique (3) disposé sur le côté supérieur (331) d'un support de moteur (33) et présentant un stator (31) et un rotor (32) tournant autour d'un axe (39) du stator (31),
un module de commande électronique (2) disposé sur le côté inférieur (332) du support de moteur (33) et présentant des composants (21), pour le pilotage du moteur électrique (3),
un radiateur (7) relié à des composants (21), avec au moins une surface de refroidissement (71),
une partie de support (5) pour loger le module de commande électronique (2) et le moteur électrique (3),
et un roue à ailettes (4) placée sur l'axe de rotation (39) du moteur électrique (3) et destinée à produire un flux d'air de travail,
**caractérisée en ce que**
le moyeu (41) de la roue à ailettes (4) est réalisé à double cloison, avec une paroi intérieure et une paroi extérieure (411), et un espace intérieur de moyeu (414) situé entre la paroi extérieure (411) et la paroi intérieure (413),
**en ce que** au moins une surface de refroidissement (71) du radiateur (7) fait saillie au moins partiellement dans l'espace intérieur de moyeu (414)
et **en ce que** l'espace intérieur de moyeu (414) est relié à un interstice (6) constitué entre le moyeu (41) de la roue à ailettes (4) et la partie de support (5), ainsi qu'à des ouvertures de passage (322, 43) prévues dans au moins un composant de l'unité d'entraînement électrique (1), et de ce fait, pendant le fonctionnement de l'unité d'entraînement électrique, il se constitue, lors d'un mouvement de la roue à ailettes (4), un écoulement d'air entre l'interstice (6) et les ouvertures de passage (322, 43).

2. Unité d'entraînement électrique selon la revendication 1, **caractérisée en ce que** les ouvertures de passage (43) sont prévues dans le moyeu (41) de la roue à ailettes (4).

3. Unité d'entraînement électrique selon la revendication 2, **caractérisée en ce que** les ouvertures de passage (43) sont constituées en tant qu'alésages dans le côté supérieur (412) du moyeu (41) de la roue à ailettes (4).

4. Unité d'entraînement électrique selon une des revendications 1 à 3, **caractérisée en ce que** les ouvertures de passage (322) sont prévues dans le rotor (32) du moteur électrique (3).

5. Unité d'entraînement électrique selon la revendication 4, **caractérisée en ce que** les ouvertures de passage (322) sont constituées en tant que trous oblongs dans le côté supérieur (323) du rotor (32).

6. Unité d'entraînement électrique selon une des revendications 1 à 5, **caractérisée en ce que** l'interstice (6) est constitué entre le côté supérieur (513) d'une partie centrale (51) de la partie de support (5) constituée en tant qu'anneau de cercle et le côté inférieur (415) du moyeu (41) de la roue à ailettes (4).

7. Unité d'entraînement électrique selon une des revendications 1 à 6, **caractérisée en ce que** toutes les surfaces de refroidissement (71) du radiateur (7) font saillie dans l'espace intérieur de moyeu (414).

8. Unité d'entraînement électrique selon une des revendications 1 à 7, **caractérisée en ce que** la paroi intérieure (413) du moyeu (41) de la roue à ailettes (4) est raccordée au moteur électrique (3), et **en ce que** des ailettes (42) sont placées sur la paroi extérieure (411) du moyeu (41) de la roue à ailettes (4).

9. Unité d'entraînement électrique selon une des revendications 1 à 8, **caractérisée en ce que** l'espace intérieur de moyeu (414) est divisé en chambres de moyeu (45) individuelles par des nervures (44) raccordant la paroi extérieure (411) à la paroi intérieure (413).

10. Unité d'entraînement électrique selon la revendication 9, **caractérisée en ce que** les surfaces de refroidissement (71) du radiateur (7) font saillie dans l'espace intérieur de moyeu (414) jusqu'aux nervures (44).

11. Unité d'entraînement électrique selon une des revendications 1 à 10, **caractérisée en ce que** le stator (31) se compose de plusieurs bobines de stator (35) constituées en tant que segments de cercle, et **en ce que** le stator (31) présente une forme circulaire avec un évidemment (38) central pour loger l'axe de rotation (39) du moteur électrique (3).

12. Unité d'entraînement électrique selon une des revendications 1 à 11, **caractérisée en ce que**, pour la mise en contact électrique des composants (21) du module de commande électronique 2, il est prévu une grille estampée (24) raccordée au côté inférieur (332) du support de moteur (33), grille estampée à partir de laquelle des éléments de connexion (28) en tant que connexions de grille estampée (26) conduisent aux contacts de connexion (36, 37) du moteur électrique (3).

13. Unité d'entraînement électrique selon une des revendications 1 à 12, **caractérisée en ce que** le module de commande électronique (2) présente des interrupteurs de commutation pour la commutation du moteur électrique (3).

14. Unité d'entraînement électrique selon la revendication 13, **caractérisée en ce que** les interrupteurs de commutation sont constitués comme des transistors de commutation (21).

15. Unité d'entraînement électrique selon une des revendications 1 à 14, **caractérisée en ce que** le moteur électrique (3) est constitué en tant que moteur à courant continu sans balai.

16. Unité d'entraînement électrique selon une des revendications 1 à 15, **caractérisée en ce que** le moteur électrique (3) est constitué en tant que moteur à rotor extérieur avec un rotor (32) qui tourne sur le côté extérieur autour du stator (31).
